# EUROPÄISCHE PATENTSCHRIFT

(11) **EP 0 761 029 B1**
(45) Veröffentlichungstag und Bekanntmachung des Hinweises auf die Patenterteilung: **15.09.1999**
(21) Anmeldenummer: 95917450.9
(22) Anmeldetag: 22.05.1995
(51) Int. Cl.: H02G 1/12

(54) **VERFAHREN ZUM ABISOLIEREN EINES ISOLIERTEN DRAHTES ODER KABELS MIT MÖGLICHERWEISE UNRUNDEM QUERSCHNITT UND ABISOLIERVORRICHTUNG FÜR DAS AUSFÜHREN DES VERFAHRENS**
PROCESS AND DEVICE FOR STRIPPING INSULATED WIRES OR CABLES WITH A POSSIBLY NON-CIRCULAR CROSS-SECTION
PROCEDE ET DISPOSITIF DE DENUDAGE DE FILS OU CABLES ISOLES A SECTION TRANSVERSALE EVENTUELLEMENT NON CIRCULAIRE

(30) Priorität: 24.05.1994 CH 160394
(43) Veröffentlichungstag der Anmeldung: 12.03.1997
(73) Patentinhaber: Schleuniger Holding AG, 3608 Thun (CH)
(72) Erfinder: LOCHER, Beat, CH-3608 Thun (CH)
(74) Vertreter: Rosenich, Paul
(86) Internationale Anmeldenummer: IB9500387
(87) Internationale Veröffentlichungsnummer: WO9532535

(56) Entgegenhaltungen:
- US-A- 2 086 104
- US-A- 2 645 959
- US-A- 4 546 675

## Beschreibung

Die Erfindung betrifft ein Verfahren zum Abisolieren eines isolierten Drahtes oder Kabels (elektrische oder optische) möglicherweise unrundem Querschnitt und eine Abisoliervorrichtung für das Ausführen des Verfahrens.

### Nächstliegender Stand der Technik

Das US Patent 4543717 der Firma Tektronix Inc. beschreibt eine Abisoliervorrichtung, bei der je ein - in bezug auf ein abzuisolierendes Kabel - axial wirkendes und ein radial wirkendes Abisoliermesser an je einem Schwenkarm gehalten sind, die unabhängig von einander und nacheinander gegen das in die Vorrichtung eingeschobenen Kabel geschwenkt werden können. Es wird dabei zuerst das radial wirkende Messer in die Isolierung eingeschwenkt, dann wird dieses Messer um das Kabel gedreht, wobei es einen Umfangsschnitt durch die Isolation bewirkt. Anschliessend wird das Radialmesser vom Kabel weggeschwenkt und das Axialmesser in die Isolation eingeschwenkt. Durch das Herausziehen des Kabels - von Hand - wird der Isolation sodann ein Längsschnitt zugefügt. Nachdem wird das Axialmesser wieder in seine Ausgangsstellung geschwenkt. Umfangsschnitt und Längsschnitt ermöglichen das Abnehmen des Isolationsstückes.

Ein Gerät entsprechend der Lehre des US-Patentes ist unter dem Namen Maranatha Cable Stripper am Markt.

Bei diesen bekannten Geräten ergeben sich folgende Probleme:
* durch die Anordnung der Messer an den Schwenkarmen kommt es bei gleicher Längeneinstellung in Abhängigkeit vom Kabeldurchmesser zu axial unterschiedlichen Berührungsstellen der Messer an der Isolation, was dazu führt, dass die Einstellgenauigkeit gering ist. Um für ein bestimmtes Kabel eine bestimmte exakte Schnittführung zu erreichen müssen daher in der Regel mehrere Probeschnitte gemacht werden, um durch "Try and Error" die richtige Einstellung zu erzielen. Dies ist zeitaufwendig und vor allem nachteilig, wenn die Abisoliervorrichtung automatisiert werden soll, da es u.U. zu einer Fehlerkumulation kommen kann.
* Durch die Schwenkführung der Messer kommt es ausserdem - wieder in Abhängigkeit von der Kabeldicke - zu einer unterschiedlichen Schrägstellung des Radialmessers in bezug auf eine Radialebene durch das Kabel. Dies führt u.U. zu Schnittflächen, die eben auch nicht in einer Radialebene liegen, was bei Weiterverarbeitung des Kabels mit hochpräzisen Ansprüchen problematisch sein kann bzw. zu Isolationsmängeln führen kann.
* Bei dicken Isolationsschichten kann es daher ausserdem zu einem Klemmen an den Seitenflächen des Radialmessers kommen, da dieses beim Einschneiden in die Isolation entlang einer Zylindermantelfläche bewegt wird und die dadurch gekrümmte Isolationsschnittfläche an der an sich geraden Seitenfläche des Radialmessers reibt.
* Als weiteres Problem kann sich die Einstellung des Radialmessers in bezug auf das Axialmesser ergeben, da aufgrund der senkrecht zueinander stehenden Schnittflächen dieser Messer bei unterschiedlichen Kabeldicken auch unterschiedliche Erstangriffspunkte am Kabelaussenmantel zum Einsatz entstehen. Es muss jedoch sichergestellt werden, dass die jeweiligen Umfangsschnitte mit den jeweiligen Axialschnitten kreuzen. Zusätzlicher Einstellaufwand kann sich daraus ergeben.

Eine andere jüngere Abisoliervorrichtung für unrunde Kabel ist im US Patent 4557163 der Firma Boeing beschrieben. Diese Vorrichtung erlaubt jedoch keinen sauberen Umfangsschnitt. Zudem muss die Vorrichtung selbst entlang des Kabels bewegt werden. Sie bietet somit keine Hilfe für die Lösung der obigen Probleme.

Eine andere prioritätsältere Abisoliervorrichtung ist in dem US Patent 4546675 der Firma Tokyo Shibaura beschrieben, deren Lehre offensichtlich den Stand der Technik zum zitierten, nächstkommenden US Patent 453717 bildet. Bei dieser Vorrichtung hatte man voneinander in Bezug auf die Längsachse des eines Kabels örtlich und bewegungsgetrennte Radial- und Axialmesser vorgesehen, die zudem noch als rotierende Messerscheiben ausgebildet waren. Mit dieser Vorrichtung konnte man somit ausschliesslich Endloskabel abisolieren, da zum vollständigen axialen und radialen Einschneiden zuerst ein Axialschnitt gemacht werden musste, was beim Abisolieren von Kabelenden kaum möglich ist, da man in einem solchen Fall schon beim Einschieben des Kabels in die Vorrichtung gegen das Axialmesser schieben müsste, was vor allem bei dünneren Kabeln nicht möglich ist. Eine Ortskombination der beiden unabhängigen Messer ist bei dieser bekannten Bauform nicht möglich. Diese bekannte Vorrichtung vermeidet somit zwar die Nachteile der Kabeldurchmesserabhängigkeit und der schrägen oder gekrümmten Schnittflächen, ist jedoch bei einer Vielzahl von Abisoliervorgängen an Kabelendstücken überhaupt nicht einsetzbar. Ausserdem baut dieser Vorrichtung gross und erfordert für die drehbaren Messer eigene, zusätzliche Antriebe.

### Aufgabenstellung

Aus diesen Problemen ergibt sich die erste Aufgabenstellung, die der Erfindung zugrunde liegt:

Es sollen ein präziseres Verfahren und eine neue Abisoliervorrichtung mit zwei zueinander senkrecht wirkenden Messern geschaffen werden, die eine höhere Präzision, eine einfachere und zielsicherere Einstellung von Abisolierlängen und einen reibungsarmen Einschneidevorgang des Radialmessers erlauben.

Gelöst wird diese Aufgabe insbesondere durch die Merkmale der Ansprüche 1 und 3. Durch die Merkmale der davon abhängigen Ansprüche werden besondere Ausgestaltungen beschrieben.

Die in bezug auf die Drehachse radiale Zuführbarkeit der Messer bringt ausser dem Vermeiden der oben angeführten Nachteile ausserdem noch den Vorteil mit sich, dass bei Bedarf die Messerzustellung auch mit individuellen Stelltrieben möglich ist, deren Zustellwirkung, durch Sensoren überwacht, tiefengenau möglich ist.

Zusammen mit der linearen Zustellbarkeit ist die unabhängige Verstellbarkeit der Messer in bezug auf die Messerhalter vorteilhaft, da sich daraus eine universelle Handhabung der Vorrichtung für verschiedene Isolationsdicken ergibt.

Eine Ausbildung des Messerhalters als hohler Körper mit bewegbarem Innenkolben erlaubt einen kompakten Aufbau, der für sich selbst universell - gegebenenfalls auch unabhängig von dieser Abisoliervorrichtung - einsetzbar ist. So kann beispielsweise der Radialmesserhalter mit dem Axialmesserhalter vertauscht werden. Die bevorzugt vorgesehene Federbelastung am Kolben führt dabei zu einer Spielfreiheit, die eine ungewünschte Verstellung am erfindungsgemäss vorgesehenen Spindeltrieb vermeidet.

Der neuartige Messerhalter könnte bei Bedarf optimal motorisiert und fernbedienbar ausgerüstet werden, so dass eine automatische Eindringtiefenverstellung vorgenommen werden kann.

Wird an der Parallelführung eine kugel- oder rollengelagerte Führung vorgesehen, ergeben sich daraus geringe Verstellkräfte und ein schnelles Reagieren auf allfällige Zustell- oder Abhebbefehle, die bevorzugt über eine ebenso reibungsminimierte Steuerrolle am messerabgewandten Ende der Messerarme erteilt werden.

Die weiter bevorzugte Anordnung mit einem gemeinsamen Drehring und einem damit gekoppelten Zentralrohr ermöglicht einen kompakten Aufbau mit einer guten Wuchtmöglichkeit, sollte für das Umdrehen der Messer eine hohe Geschwindigkeit gewählt werden. Ausserdem ermöglicht das Konzept des gemeinsamen Drehringes, auch mehrere Messerhalter - z.B. sternförmig - anzuordnen, so dass bei Bedarf auch gleichzeitig mehrere Umfangsschnitte und/oder mehrere Axialschnitte vorgenommen werden können. Letzteres ist bei besonders schlecht ablösbaren Isolierungen von Vorteil.

Nachdem vor allem unrunde Kabel z.B Mehrleiterkabel nicht wirklich zentriert werden können, ist die Variante mit gegen Federkraft ausweichbaren Messerarmen bevorzugt, wobei bevorzugt jedem Messerhalter ein gegebenenfalls einstellbares Druckfederelement zugeordnet ist, gegen das die Messerarme infolge einer Exzentrizität am Kabel radial ausweichen können.

Für das Einstellen der abzuisolierenden Draht- bzw. Kabellänge dient eine einfache Anschlagstange mit vorzugsweise an ihr befestigtem Massstab im Zentralrohr, die allerdings auch entfallen kann, sofern eine erfindungsgemässe Vorrichtung neu auch im Verbund mit weiteren, automatisch gesteuerten Maschinen arbeitet. Diese können vorteilhafterweise hintereinander angeordnet werden, so dass Endloskabel bearbeitet werden können. Als günstig haben sich bei solchen erfinderischen Anlagen Förderrollen erwiesen, die das Kabel oder den Draht in und aus dem Zentralrohr fördern und dabei gegebenenfalls gleichzeitig dessen Länge bestimmen. Zur Erhöhung der Verarbeitungspräzision ist jedoch eine von den Förderrollen unabhängige Längenmesseinrichtung bevorzugt, die beispielsweise Markierungen auf dem Kabel anbringt und diese mit einem Lesegerät in genau definiertem Abstand zum Markiergerät wiedererkennt. Durch eine solche erfinderische Weiterentwicklung liessen sich Messungenauigkeiten reduzieren.

Bevorzugt ist die Vorrichtung mit einer drehstarren Zentriervorrichtung ausgerüstet, die vor den Messern angeordnet ist und den Draht oder das Kabel in eine gute Abisolierposition bringt. Das Grundprinzip der gewählten Zentriervorrichtung stammt aus dem US Patent 5010797. Alle dort dargestellten Zentriervorrichtungen lassen sich gut zusammen mit der erfindungsgemässen Abisoliervorrichtung verwenden, wobei die später u.a. in Anspruch 14 beschriebene infolge ihrer Robustheit bevorzugt ist.

Weitere spezielle Ausführungsformen und vorteilhafte Lösungsangaben ergeben sich aus den beispielhaften Figuren und deren Beschreibung. Dabei zeigen:
- Fig.1: einen Längsschnitt durch ein erfindungsgemässes Beispiel einer Abisoliervorrichtung;
- Fig.2: eine Draufsicht auf einige, schematisch dargestellte Bauteile der Vorrichtung nach Fig.1;
- Fig.3: eine Ansicht der Abisoliermesser und ihrer Halter aus Richtung des einzuführenden Kabels schematisch dargestellt;
- Fig.4: eine Ansicht entsprechend Fig.3 jedoch aus der entgegengesetzten Richtung;

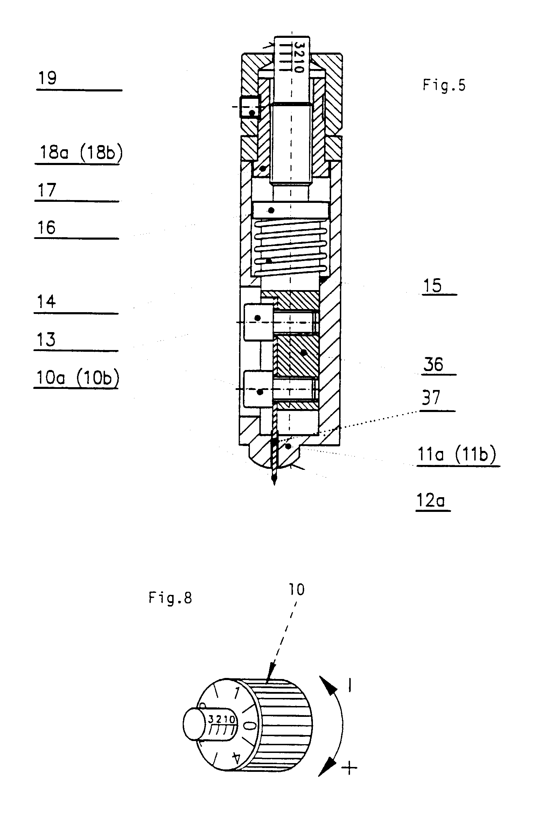

- Fig.5: ein Detail der Messerhalter im Schnitt;

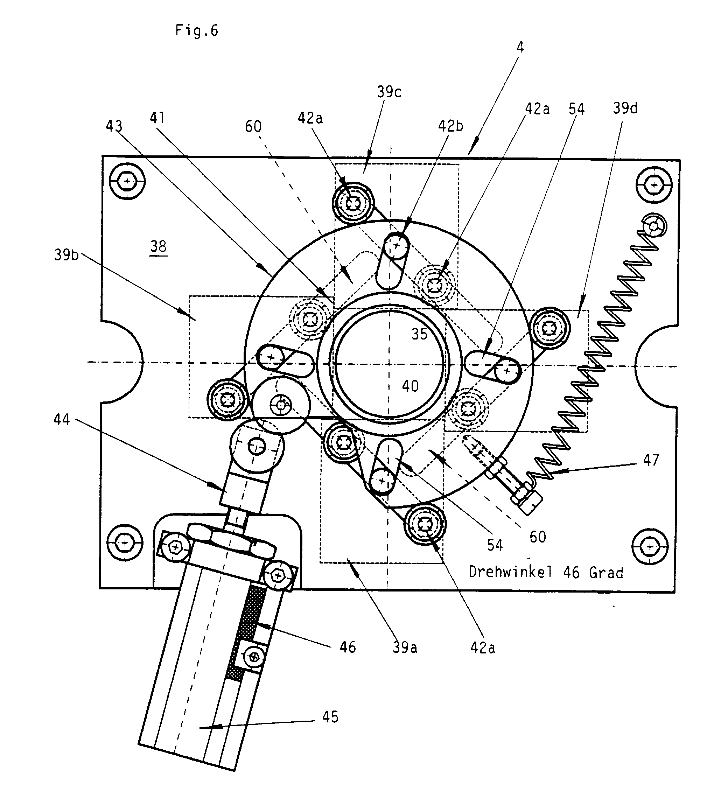

- Fig.6: eine Ansicht der bevorzugt benutzten Zentriervorrichtung, deren Merkmale und Varianten dazu beispielsweise in dem US Patent 5010797 beschrieben sind, dessen Inhalt als im Rahmen dieser Anmeldung liegend geoffenbart gilt, sofern er sich konkret auf die Zentriervorrichtung bezieht;
- Fig.7: eine Variante zur Vorrichtung nach Fig.1.
- Fig.8: zeigt einen Skalenring in Schrägansicht. Die Auflösung der Skala beträgt 0.05mm, d.h. ein Umgang am Ring be-deutet eine Verschiebung des Messers um 0.5mm und
- Fig.9: eine Erläuterung zu einem Vorteil der Erfindung.

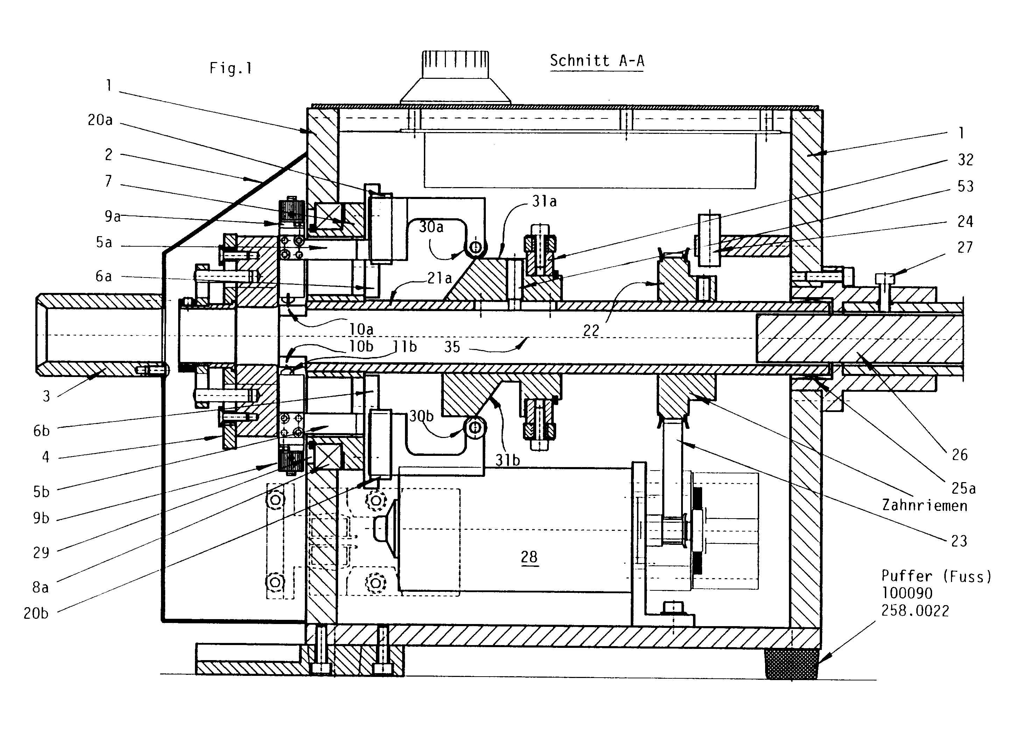

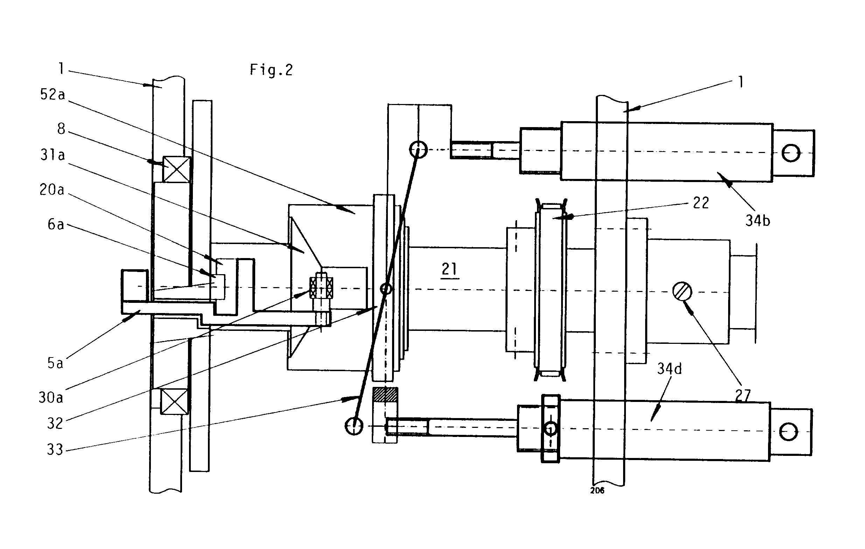

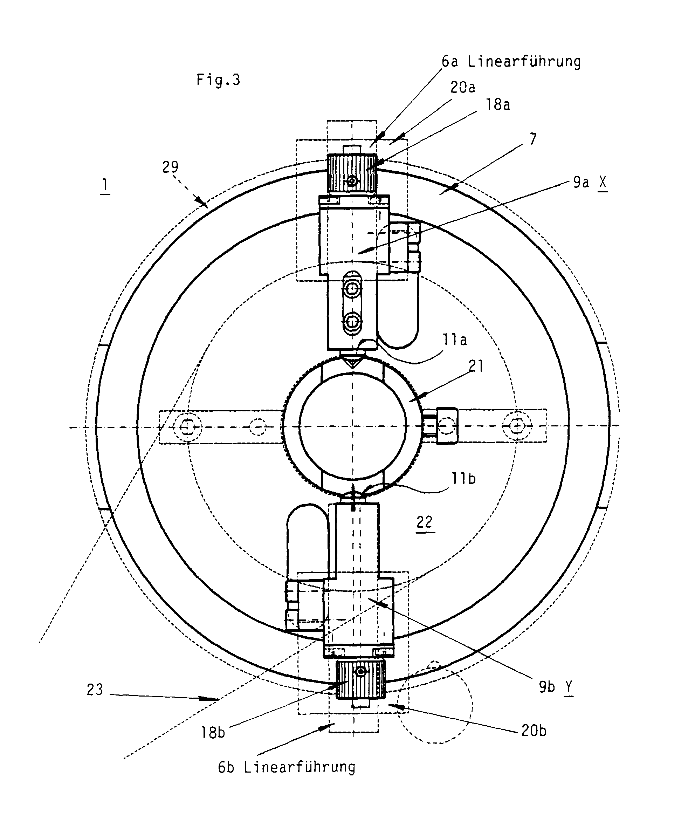

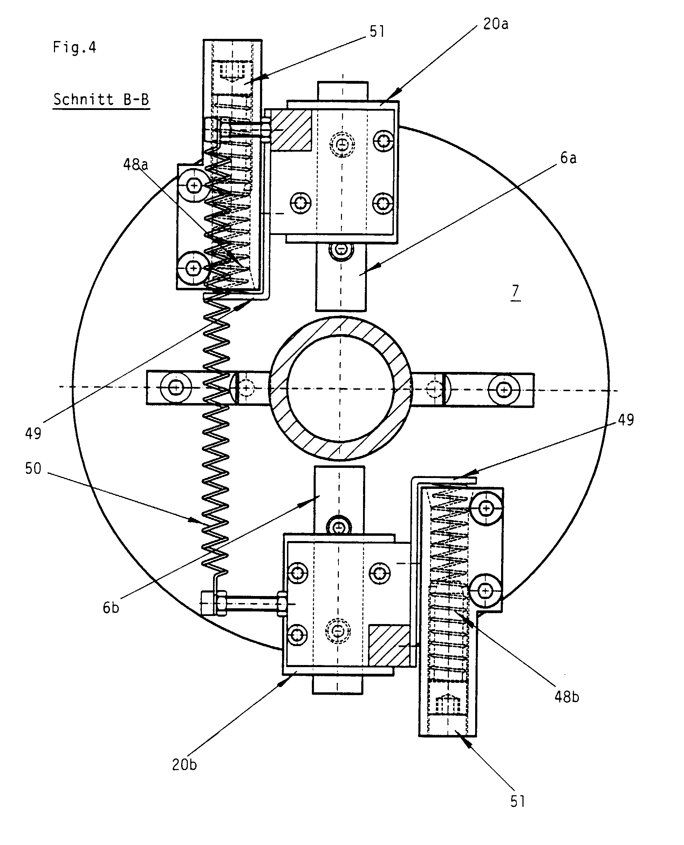

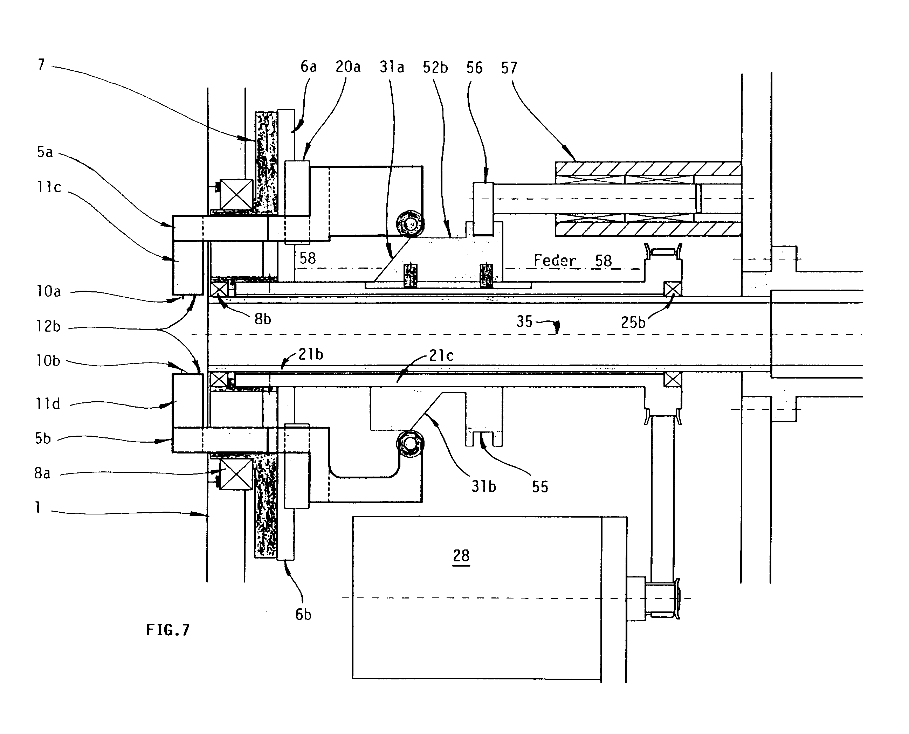

Die Figuren werden zusammenhängend beschrieben, gleiche Bauteile erhalten gleiche Bezugszeichen. Funktionsähnliche Bauteile erhalten gleiche Bezugszeichen mit unterschiedlichen Indizes. Die Einleitung, Figurenbeschreibung und die Ansprüche bilden eine Informationseinheit; Informationen ergänzen sich somit gegenseitig. Die angegebenen Bezugszeichen haben dabei hauptsächlich die folgende Bedeutung und Wirkungsweise:
- 1: Gehäuse mit einer vorderen, hinteren Platte, einer Bodenplatte und einer Abdeckplatte, in der symbolisch ein Wahlschalter für verschiedene Programmbetriebsarten dargestellt ist. Solche Programmbetriebsarten könnten beispielsweise sein: nur rotativ einschneiden; rotativ und längs einschneiden; nur längs einschneiden; einschneiden und zentrieren mit den Zentrierbacken; einschneiden und zentrieren mit Zentrierhülsen, die beispielsweise von den Zentrierbacken geklemmt gehalten werden. Es umschliesst und lagert die Vorrichtung;
- 2: Abdeckhaube, dient vor allem dem Zugriffsschutz und ist z.B. aus durchsichtigem Kunststoff und vom Gehäuse 1 abnehmbar oder an diesem mittels Scharnier schwenkbar befestigt;
- 3: Einführrohr, dient der leichteren Zuführung von Drähten und Kabeln und wirkt als erweiterter Zugriffsschutz;
- 4: Zentriervorrichtung, wie oben und in Anspruch 14 beschrieben, könnte auch entfallen oder durch andere Zentriervorrichtungen ersetzt werden;
- 5a: Messerarm radial wirkend trägt den Radialmesserhalter 11a und wirkt mit der Steuerkurve 31a zusammen; die dargestellte Form ist zweckmässig, jedoch nicht zwingend;
- 5b: Messerarm, axial wirkend, trägt den Axialmesserhalter 11b und wirkt mit der Steuerkurve 31b zusammen;
- 6a: Parallelführung für Messerarm 5a, auf ihr gleitet ein Linearschlitten 20a; dieses kann auch als wartungsfreies Normelement ausgeführt sein.
- 6b: Parallelführung für Messerarm 5b trägt ein Linearschlitten 20b; 7 Drehring trägt die Parallelführungen 6 und ist mit dem Zentralrohr 21a verbunden und im Gehäuse 1 mittels Kugellager 8a gelagert. Ein Drehen des Zentralrohres 21a über die Riemenscheibe 22 führt somit zu einer Rotation der Messerarme 5 um die Drehachse 35. Sofern während der Umdrehung die Steuerkurve 31a den Weg für die Steuerrolle 30a des Messerarmes 5a freigibt, bewegt sich dieser und mit ihm sein Messer 10a auf den Draht oder das Kabel zu, um dessen Isolation den Umfangsschnitt beizubringen. Während dieser Zeit sperrt die Steuerkurve 31b den Messerarm 5b, so dass dessen Axialmesser 10b abgehoben bleibt. Mit dem Zurückschieben der Steuerkurve 31a (in Fig.1 nach links) gibt die Steuerkurve 31b den Weg für den Messerarm 5b frei, so dass nun das Axialmesser 10b in Schnittposition gelangt. Wird nun der Draht oder das Kabel wieder aus der Vorrichtung gezogen, wird die Isolation längs eingeschnitten.
- 8a: Lager, z.B. Kugellager Variante in Fig.7:
- 8b: Innenlager für Drehring 7 an starrem Zentralrohr 21b
- 9a: Messereinstellvorrichtung am Messerhalter 11a für Radialmesser 10a
- 9b: Messereinstellvorrichtung am Messerhalter 11b für Axialmesser 10b
- 10a: Radialmesser (für Umfangsschnitt)
- 10b: Axialmesser (für Schnitt entlang des Kabels)
- 11a: Radialmesserhalter
- 11b: Axialmesserhalter
- 11c,d: Messerhalter gemäss Variante Fig.7 ohne besondere Einstellmöglichkeit für die Messer 10a,b;
- 12a: Schulter stützt sich beim Einschneiden in die Isolation an der Aussenwandung der Isolation ab und begrenzt dadurch die Schnittiefe. Mit der Einstellvorrichtung 9, die im wesentlichen über einen Spindeltrieb 17 und eine Anzeige 19 verfügt, kann die Schnittiefe gezielt variiert werden. Die Schulter 12a ist bevorzugt abgerundet, insbesondere kugelförmig, da sie dadurch besser der Kontur der Kabeloberfläche folgen kann und um am Draht oder Kabel nur geringe Reibungswiderstände zu verursachen. Die Montage des Messers 10 selbst ist denkbar einfach: Da hier nicht wie beim Bekannten das Messer 10 selbst variiert werden muss - Tiefenveränderungen können am Kolben 36 eingestellt werden - müssen lediglich Schrauben 13 gelöst werden, wonach das Messer 10 aus der Öffnung 37 gezogen werden kann. Ein neues Messer wird in die Öffnung 37 bis zum Anschlag am Kolben 36 eingeschoben und die Schrauben wieder eingedreht.
- 12b: Variante gemäss Fig.7 ohne Abrundung
- 13: Befestigungsschrauben, gegebenenfalls auch nur eine Schraube;
- 14: Druckfeder spannt Kolben 36 gegen das Gehäuse des Messerhalters 11 und nimmt das Spiel des Spindeltriebes 17 auf;
- 15: Gehäuseflansch für Feder 14
- 16: Stützvorsprung für Feder 14
- 17: Spindeltrieb: Ein Gewinde am Kolben 36 wirkt mit einem drehbaren Innengewinde am Spindeltrieb 17 zusammen, der im Körper des Messerhalters 11 drehbar gelagert ist. Ein Teil des Triebes 17 ragt aus dem Körper und ist dort drehfest mit einem Skalenring 18 verbunden, die sich wiederum am Körper abstützt. Der Spindeltrieb ist somit lagefixiert; eine Drehung am Skalenring 18 bewirkt eine Axialbewegung des Kolbens 36. Dieser durchsetzt den Skalenring 18 und trägt eine Tiefenanzeige 19, an der die eingestellte Schnittiefe (Überstand des Messers über die Schulter 12a) abgelesen werden kann.
- 18a,b: Skalenring trägt an seiner oberen Stirnseite eine Skala, die mit einer Gegenskala an der oberen Stirnseite des Kolben 36 zusammenwirkt, so dass eine Feineinstellung auf hundertstel Millimeter problemlos möglich ist.
- 19a,b: Tiefenanzeige
- 20a,b: Linearschlitten, die Führungen 6,20 könnten jedoch auch anders, z.B. als Schwalbenschwanzsupportführung ausgebildet sein;
- 21a: Zentralrohr ist mit dem Drehring 7 verbunden und am anderen Ende mittels Lager 25a im Gehäuse 1 gelagert.
- 21b: starres Zentrahlrohr gemäss Variante Fig.7, an dem
- 21c: drehbares Zentrahlrohr über Lager 8b und 25b gelagert ist; diese Variante hat als Vorteil, dass ein eingeführtes Kabel keinesfalls durch Reibung im Rohr 21a (Fig.1) verdrillt werden kann, da Rohr 21b starr ist.
- 22: Riemenscheibe ist drehstarr mit 21a verbunden und überträgt die Antriebsleistung eines Motors 28 bzw. Zahnriemens 23 auf das Zentralrohr. Dieses könnte im Rahmen der Erfindung auch drehstarr ausgebildet sein, wobei dann der Zahnriemen 23 mit dem Drehring 7 zu koppeln ist und letzterer gegenüber dem Zentralrohr gelagert werden muss. Die Steuerkurven 31 müssen dann ebenso mit dem Drehring drehgekoppelt werden. Eine alternative nicht näher dargestellte Ausbildungsvariante im Rahmen der Erfindung ergibt sich, wenn der Drehring mit den Messerarmen 5 und den Steuerkurven 31 gegenüber dem Gehäuse 1 parallel zur Drehachse 35 verschiebbar ist. Dann könnten Axialschnitte auch ohne händisches Herausziehen des Kabels in die Isolation gebracht werden.
- 23: Antriebsriemen, könnte auch durch Zahnräder o.dgl. ersetzt werden
- 24: Positionssensor ist nur optional vorgesehen, um im Falle eines automatischen Betriebes eine bestimmte Drehposition des Drehringes bzw. der Messer 10 detektieren zu können;
- 25a: zweites Lager, z.B. Gleitlager für Zentralrohr 21a
- 26: Anschlagstange für Längeneinstellung des Kabels; entfällt für automatisierte Anlagen mit einer Endloskabelführung; könnte auch ersetzt sein durch elektronisch ansteuerbare Weggeber zur automatischen Längeneinstellung. Die Anschlagstange wird mittels
- 27: Fixierschraube in ihrer Anschlagsposition arretiert.
- 28: Antriebsmotor könnte bei Bedarf auch ein Schrittmotor sein; dann kann jedenfalls der Sensor 24 entfallen. Bei Verwendung von nur einem Axialmesser 10b und dem Wunsch nach mehreren Axialschnitten wäre ein solcher Schrittmotor von Vorteil, um den Drehring 7 in verschiedenen Positionen zu fixieren. Besonders einfach wären solchen mehrfachen Axialschnitte auch mit der oben erwähnten Verschiebbarkeit des Drehringes 7 oder mit der Mehrfachanordnung von Axialmessern möglich.
- 29: Bohrung im Gehäuse 1, die das Lager 8a aufnimmt (Fig.3)
- 30a,b: Steuerrolle, überträgt die Stellung der Steuerkurve 31
- 31a,b: Steuerkurven sind beim vorliegenden Ausführungsbeispiel an einem am Zentralrohr 21a längsverschieblichen Block 52a ausgebildet, gegenüber diesem jedoch mittels Stift 53 drehfest gehalten. Die Längsverschiebung des Blocks wird durch einen
- 32: Mitnahmering und einen
- 33: Steuerhebel bewerkstelligt, welch letzterer von wenigstens einem, im vorliegenden Ausführungsbeispiel von zwei
- 34a,b: Zylindern angesteuert wird, wie symbolisch in Fig.2 angedeutet ist. Details dieser Ansteuerung sind dem Fachmann geläufig bzw. können bei Bedarf aus dem US Patent 4543717 Fig.4 und zugehörige Beschreibungsteile entnommen werden. Dieses Dokument gilt insoweit als mit seinem Inhalt im Rahmen dieser Anmeldung beschrieben.
- 35: Drehachse, die im günstigsten Fall (rundes Kabel) mit der Achse eines eingesetzten Kabels identisch ist. Sie ist die Drehachse der Lager 8a und 25a.
- 36: verschiebbarer Kolben im Messerhalter 11
- 37: Öffnung für Messer 10, wirkt auch als Seitenführung;
- 38: Grundplatte der Zentriervorrichtung 4
- 39: Zentrierblock wirkt mit den jeweils benachbarten Zentrierblöcken 39 zusammen; die Anordnung von vier Blöcken erlaubt auch stark ovale Kabel gut zu zentrieren, da sich diese entlang einer Diagonale im durch die Blöcke 39 umschlossenen Quadrat ausrichten.
- 40: Bohrung in der Grundplatte 38 für den Durchtritt eines Drahtes oder Kabels;
- 41: Schiebekanten an den Blöcken 39 gleiten aneinander beim Zur-Drehachse-35-radialen-Verschieben der Blöcke;
- 42a,b: Rollen- und Stiftführung stützen sich am bzw. in entsprechenden Nuten 54 einer
- 43: Steuerscheibe, die von einem
- 44: Steuerkolben in Drehrichtung angesteuert ist, um die Zentrierblöcke 39 zu verschieben.
- 45: Steuerzylinder für Steuerkolben 44
- 46: Positionssensor am Steuerzylinder 45 sensiert die Position des Steuerkolbens 44 um daraus auf den Zustand der Zentrierblöcke 39 zu schliessen;
- 47: Feder dient als Rückstellkraft gegen die Kraft des Steuerkolbens 44 und öffnet die Zentrierbacken;
- 48a,b: Andrückfeder drückt über ein
- 49: Winkelstück jeden Messerhalter individuell in seine Arbeitsstellung soweit dies die Stellung der Messerarme 5 zulässt; Exzentrizitäten des Kabels, die Messer 10 und Schulter 12a nach aussen drängen, werden durch diese Feder 48 aufgefangen, ohne das dabei ein anderes Messer 10 vom Kabelmantel abhebt. Dieses wird hauptsächlich auch durch die
- 50: Rückholfeder sichergestellt, die beide Messerhalter zueinander zieht, um insbesondere die Fliehkraft zu kompensieren (Fig.4). Diese ersetzt - wegen der besseren Wartungsfreundlichkeit - vorteilhaft den O-Ring, wie er im erstzitierten US Patent beschrieben ist.
- 51: Federkrafteinstellung für die Andrückfedern 48, um den Materialeigenschaften der abzuisolierenden Kabel gerecht zu werden.
- 52a: Block der Steuerkurven 31a,b
- 52b: Block Variante in Fig.7
- 53: Stift für 52a
- 54: Nuten
- 55: Ringnut im Block 52b gemäss der Variante in Fig.7, die eine unterschiedliche Ansteuerung der Steuerkurven 31a,b aufweist, bei der ein in die Nut 55 eingreifendes
- 56: Steuerglied von einem
- 57: Steuertrieb in axialer Richtung verschoben wird, um die Steuerkurven lagerichtig zu positionieren. Bei dieser Bauform wird der Block durch zwei
- 58: Positionsfeder spielfrei gehalten.
- 60: Nuten in Grundplatte 38
- 61: Kabelisolierung

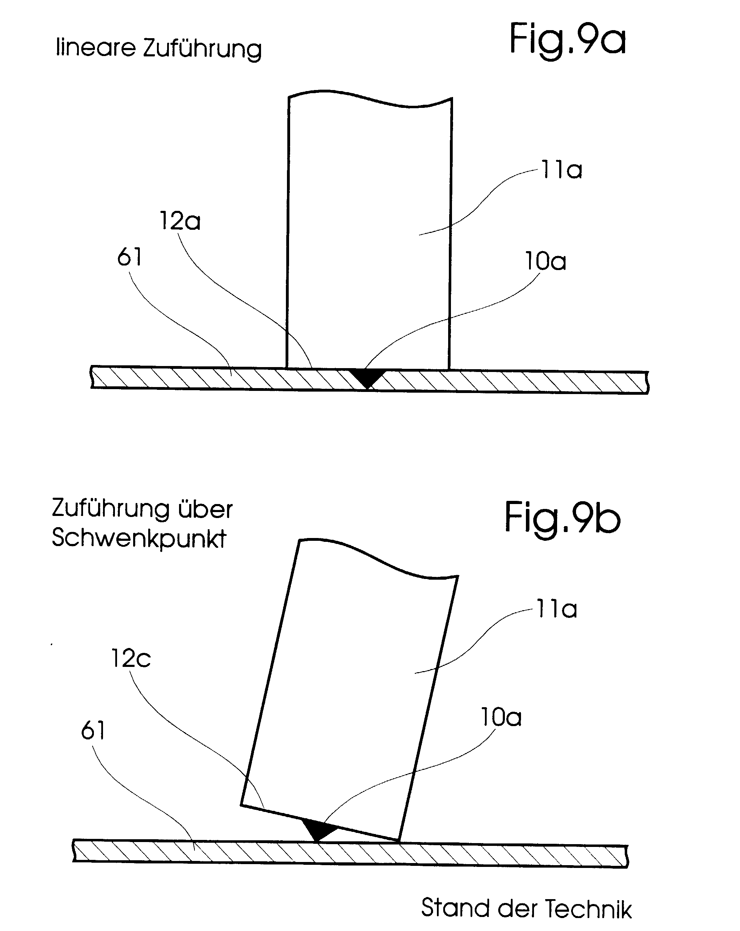

Ein weiterer Vorteil der Erfindung wird deutlich an den symbolischen Zeichnungen der Fig.9. Fig.9a zeigt einen Messerhalter lla gemäss Erfindung, dessen Messer 10a in eine Kabelisolierung 61 einschneidet. Die Schultern 12a liegen beidseitig des Messers 10a an der Mantelfläche der Isolierung 61. Besonders bei dünnen Isolationen wirkt dies positiv auf die Schnittqualität. Fig.9b zeigt im Gegensatz dazu den Stand der Technik, wo die entsprechende Schulter 12c - in Abhängigkeit vom Kabeldurchmesser - nicht parallel zur Isolationsoberfläche anliegt.

## Patentansprüche

1. Verfahren zum Abisolieren eines isolierten Drahtes oder Kabels mit möglicherweise unrundem Querschnitt, bei dem ein Radialmesser (10a) für einen Umfangsschnitt und ein Axialmesser (10b) für einen Längsschnitt in der Isolierung zeitlich nacheinander an diese herangeführt werden, wobei nach dem Eindringen des Radialmessers (10a) eine drehende Relativbewegung zwischen diesem und dem Draht oder Kabel vollführt wird, so dass der Umfangsschnitt entsteht, wobei das Radialmesser (10a) während seiner Zustellung zum Draht oder Kabel entlang einer Senkrechten auf die Draht- oder Kabeloberfläche zugeführt wird, dadurch gekennzeichnet, dass die Zustellung des Radialmessers (10a) und des Axialmessers (10b) durch Längsverschiebung eines mit Steuerkurven versehenen Steuerblocks (52) erfolgt, dass das Radialmesser (10a) und das Axialmesser (10b) an Messerhaltern (11a,b) starr gehalten sind, und dass die Messer - in Bezug auf die Axialrichtung des Kabels etwa auf gleicher Längenposition liegen.

2. Verfahren nach Anspruch 1, dadurch gekennzeichnet, dass auch das Axialmesser (10b) während seiner Zustellung zum Draht oder Kabel entlang einer Senkrechten auf die Draht- oder Kabeloberfläche zugeführt wird, wobei die Messerstellungen so gewählt werden, dass die durch die jeweilige Senkrechte gelegte Ebene in der auch der jeweilige Schnitt in der Kabel- oder Drahtisolation liegt, zur entsprechenden Ebene durch die andere Senkrechte senkrecht verläuft.

3. Vorrichtung für das Durchführen eines Verfahrens nach Anspruch 1 oder 2 mit wenigstens einem Radialmesserhalter (11a) für ein starres Radialmesser (10a) und wenigstens einem Axialmesserhalter (11b) für ein starres Axialmesser (10b), die an je einem, um eine gemeinsame Drehachse (35) drehbaren und in Richtung auf die Drehachse (35) ansteuerbaren Messerarm (5a bzw. 5b) so gehalten sind, dass sie in bezug auf die Längsachse des Drahtes oder Kabels etwa auf gleicher Längenposition liegen, wobei die Messerarme (5a,b) an je einer Parallelführung (6a,b) verschieblich gehalten sind, wobei die Parallelführungen (6a,b) senkrecht auf die Drehachse (35) stehen und an einem Drehring (7) angeordnet sind, der um die Drehachse (35) drehbar in einem Gehäuse (1) gelagert ist.

4. Vorrichtung nach Anspruch 3, dadurch gekennzeichnet, dass wenigstens das Radialmesser (10a), vorzugsweise aber auch das Axialmesser (10b) relativ zum jeweiligen Messerhalter (11a,b) einstellbar sind, so dass die jeweilige höchstmögliche Schnittiefe, die durch je eine Schulter (12a) des jeweiligen Messerhalters (11a,b) begrenzt ist, einstellbar ist.

5. Vorrichtung nach Anspruch 4, dadurch gekennzeichnet, dass wenigstens der Radialmesserhalter (11a) als hohler Körper mit einer nach unten weisenden Öffnung (37) für das Radialmesser (10a) aufgebaut ist, in dem ein verschiebbarer Kolben (36) angeordnet ist, der an seinem unteren Ende eine Befestigungsvorrichtung (13) für das Radialmesser (10a) aufweist und der an seinem oberen Ende mit einem Spindeltrieb (17) o.dgl. verbunden ist, der eine einstellbare Relativverschiebung zwischen dem Kolben (36) und dem Körper erlaubt.

6. Vorrichtung nach Anspruch 5, dadurch gekennzeichnet, dass der Kolben zum Körper federbelastet ist, wobei letzterer vorzugsweise einen Gehäuseflansch (15) und ersterer einen Stützvorsprung (16) aufweist, zwischen welchen eine den Spindeltrieb (17) vorspannende Druckfeder (14) angeordnet ist.

7. Vorrichtung nach Anspruch 5 oder 6, dadurch gekennzeichnet, dass der Spindeltrieb (17) motorisch fernbedienbar ist und gegebenenfalls ein fernabfragbares Wegmessglied aufweist.

8. Vorrichtung nach einem der vorhergehenden Ansprüche 3 bis 7, dadurch gekennzeichnet, dass wenigstens einer der Messerarme (5a,b) über einen Linearschlitten (20a,b), der insbesondere rollen- oder kugelgeführt ist, an der zugehörigen Parallelführung (6a,b) verschieblich gelagert ist.

9. Vorrichtung nach einem der vorhergehenden Ansprüche 3 bis 8, dadurch gekennzeichnet, dass wenigstens einer der Messerarme (5a,b) an seinem dem Messer (10a,b) abgewandten Ende eine Steuerrolle (30a,b) aufweist, die mit einer mit dem Drehring (7) mitdrehbaren Steuerkurve (31a,b) zusammenwirkt.

10. Vorrichtung nach einem der vorhergehenden Ansprüche 3 bis 9, dadurch gekennzeichnet, dass der Drehring (7) mit einem Zentralrohr (21a) gekoppelt ist, das an seinem anderen Ende im Gehäuse (1) drehgelagert ist und die verschiebbare Steuerkurve (31a,b) trägt.

11. Vorrichtung nach einem vorhergehenden Ansprüche, insbesondere nach den Ansprüchen 8 bis 10, dadurch gekennzeichnet, dass wenigstens ein Linearschlitten (20a,b) motorisch fernbetreibbar gegenüber der jeweiligen Parallelführung (6a,b) verschiebbar ist und dass an der Parallelführung (6a,b) vorzugsweise eine fernabfragbare Messvorrichtung angeordnet ist.

12. Vorrichtung nach einem der vorhergehenden Ansprüche, dadurch gekennzeichnet, dass wenigstens einem der Messerarme (5a,b) eine Andrückfeder (48a,b) zugeordnet ist, so dass er gegenüber der Drehachse (35) gegen Federkraft radial ausweichen kann, wobei die Federkraft vorzugsweise einstellbar und/oder stossgedämpft ist.

13. Vorrichtung nach einem der vorhergehenden Ansprüche 9 bis 12, dadurch gekennzeichnet, dass das Zentralrohr (21a) eine - gegebenenfalls motorisch verstellbare - Anschlagstange (26), insbesondere mit einem Massstab für die Längeneinstellung der abzuisolierenden Drähte oder Kabel aufweist.

14. Vorrichtung nach einem der vorhergehenden Ansprüche mit einer dem einzuführenden Draht oder Kabel zugewandten drehstarren Zentriervorrichtung (4), gekennzeichnet durch folgenden Aufbau:
- eine Grundplatte (38) mit einer zur Drehachse (35) zentrischen Bohrung (40) ist mit dem Gehäuse (1) starr verbunden;
- an der Grundplatte (38) sind wenigstens drei Zentrierblöcke (39) vorgesehen, von denen je zwei sich berührende Schiebekanten (41) aufweisen;
- die Zentrierblöcke (39) verfügen über eine Rollen- oder Stiftführung aus zwei Stiften (42a), die in Nuten (60) in der Grundplatte (38) gleiten und je einem Stift (42b), der zusätzlich in einer Nut (54) der Steuerscheibe (43) gleitet, wobei ein Verdrehen der Steuerscheibe eine Mitnahme des Stiften 42b in Richtung Drehachse (35) bewirkt, was ein - in bezug auf die Drehachse (35) - radiales Verschieben der Zentrierblöcke zur Folge hat;
- die Steuerscheibe (43) wird in Drehrichtung von einem insbesondere fernbedienbaren Steuerkolben (44) beaufschlagt, der vorzugsweise mit einem fernabfragbaren Positionssensor (46) ausgerüstet ist;
- eine zwischen der Steuerscheibe (43) und der Grundplatte (38) gespannte Feder (47) sorgt für die Rückstellung der Steuerscheibe (43) und damit der Zentrierblöcke (39) gegen den Steuerkolben (44).

15. Vorrichtung nach einem der vorhergehenden Ansprüche, dadurch gekennzeichnet, dass die Zentriervorrichtung aus austauschbaren, gegebenenfalls konischen Zentrierhülsen besteht, die am Gehäuse (1) - gegebenenfalls zwischen Zentrierbacken - arretierbar sind.

16. Vorrichtung zum Einschneiden und/oder Abisolieren von Endlosdrähten oder Endloskabeln mit einer Vorrichtung nach einem der Ansprüche 3 bis 15, dadurch gekennzeichnet, dass fluchtend mit dem Zentralrohr (21a) Förderrollen vorgesehen sind, die ein durch das Zentralrohr zugeführtes Kabel vor oder hinter dem Zentralrohr (21a) erfassen und gegebenenfalls zu einem weiteren Gerät, z.B. zu einer Schneid- oder Aufwickelvorrichtung fördern.

17. Vorrichtung nach Anspruch 16, dadurch gekennzeichnet, dass zur Längenbestimmung des durch die Rollen bewegten Drahtes oder Kabels eine Markierungs- und Ablesevorrichtung angeordnet ist.

18. Vorrichtung nach einem der vorhergehenden Ansprüche, dadurch gekennzeichnet, dass die Messerhalter an ihrer das Messer freistellenden Seite kugelförmig abgerundet sind.

## Claims

1. Process for stripping an insulated wire or cable having a cross-section which may be non-circular, in which a radial blade (10a) for a circumferential cut and an axial blade (10b) for a longitudinal cut in the insulation are guided along said insulation in succession, the radial blade (10a) being rotated relative to the wire or cable after penetration of said radial blade, so that the circumferential cut is formed, the radial blade (10a) being fed along a perpendicular to the wire or cable surface during its feed towards the wire or cable, characterized in that the feed of the radial blade (10a) and of the axial blade (10b) is effected by longitudinal displacement of a control block (52) provided with control cams, that the radial blade (10a) and the axial blade (10b) are rigidly held on blade holders (11a, b), and that the blades are approximately in the same length position, relative to the axial direction of the cable.

2. Process according to Claim 1, characterized in that the axial blade (10b), too, is fed along a perpendicular to the wire or cable surface during its feed towards the wire or cable, the blade positions being chosen so that the plane which passes through the respective perpendicular and in which the respective cut in the cable or wire insulation is also present is at right angles to the corresponding plane through the other perpendicular.

3. Device for carrying out a process according to Claim 1 or 2, having at least one radial blade holder (11a) for a rigid radial blade (10a) and at least one axial blade holder (11b) for a rigid axial blade (10b), each of which is held on a blade arm (5a or 5b) which is rotatable about a common axis of rotation (35) and can be actuated in the direction towards the axis of rotation (35), in such a way that they are in approximately the same length position relative to the longitudinal axis of the wire or cable, the blade arms (5a, b) each being displaceably held on a parallel guide (6a, b), the parallel guides (6a, b) being at right angles to the axis of rotation (35) and being arranged on a rotary ring (7) which is mounted rotatably about the axis of rotation (35) in a housing (1).

4. Device according to Claim 3, characterized in that at least the radial blade (10a), but preferably also the axial blade (10b), are adjustable relative to the respective blade holder (7a, b) so that it is possible to set the respective maximum possible cutting depth which is limited by a shoulder (12a) of the respective blade holder (11a, b).

5. Device according to Claim 4, characterized in that at least the radial blade holder (11a) is in the form of a hollow body having a downward-pointing orifice (37) for the radial blade (10a), in which body is arranged a displaceable piston (36) which has, at its lower end, a fastening device (13) for the radial blade (10a) and which is connected at its upper end to a spindle drive (17) or the like, which permits adjustable relative displacement between the piston (36) and the body.

6. Device according to Claim 5, characterized in that the piston is spring-loaded against the body, the latter preferably having a housing flange (15) and the former a support projection (16), between which a pressure spring (14) which pretensions the spindle drive (17) is arranged.

7. Device according to Claim 5 or 6, characterized in that the spindle drive (17) can be remote controlled by means of a motor and optionally has a displacement measuring member with a remote inquiry facility.

8. Device according to any of the preceding Claims 3 to 7, characterized in that at least one of the blade arms (5a, b) is displaceably mounted on the associated parallel guide (6a, b) by means of a linear carriage (20a, b), which, in particular has roller bearings or ball bearings.

9. Device according to any of the preceding Claims 3 to 8, characterized in that at least one of the blade arms (5a, b) has, at its end facing away from the blade (10a, b), a control roller (30a, b) which cooperates with a control cam (31a, b) rotatably together with the rotary ring (7).

10. Device according to any of the preceding Claims 3 to 9, characterized in that the rotary ring (7) is coupled with a central tube (21a) which is rotatably mounted at its other end in the housing (1) and carries the displaceable control cam (31a, b).

11. Device according to any of the preceding Claims, in particular according to Claims 8 to 10, characterized in that at least one linear carriage (20a, b) is displaceable by means of a remote controllable motor relative to the respective parallel guide (6a, b), and that a measuring apparatus having remote inquiry facilities is preferably arranged on the parallel guide (6a, b).

12. Device according to any of the preceding Claims, characterized in that a pressure spring (48a, b) is coordinated with at least one of the blade arms (5a,b) so that said blade arm can be radially deflected relative to the axis of rotation (35) against spring force, the spring force preferably being adjustable and/or provided with shock absorption.

13. Device according to any of the preceding Claims 9 to 12, characterized in that the central tube (21a) has an - optionally motor-adjustable - stop rod (26), in particular having a scale for length adjustment of the wires or cables to be stripped.

14. Device according to any of the preceding Claims, having a nonrotatable centring apparatus (4) which faces the wire or cable to be inserted, characterized by the following structure:
- a baseplate (38) having a hole (40) concentric with the axis of rotation (35) is rigidly connected to the housing (1);
- at least three centring blocks (39) are provided on the baseplate (38), two of which centring blocks have thrust edges (41) which touch one another;
- the centring blocks (39) have a roller guide or pin guide comprising two pins (42a) which slide in grooves (60) in the baseplate (38) and one pin (42b) which additionally slides in a groove (54) in the control disc (43), rotation of the control disc causing the pin 42b to be driven in the direction of the axis of rotation (35), which results in radial displacement of the centring blocks relative to the axis of rotation (35);
- the control disc (43) is actuated in the direction of rotation by a control piston (44), in particular one which can be remote controlled, which piston is preferably equipped with a position sensor (46) having remote inquiry facilities;
- a spring (47) stretched between the control disc (43) and the baseplate (38) ensures restoration of the control disc (43) and hence of the centring blocks (39) against the control piston (44).

15. Device according to any of the preceding Claims, characterized in that the centring apparatus consists of interchangeable, optionally conical centring sleeves which are lockable on the housing (1), optionally between centring jaws.

16. Device for cutting into and/or stripping continuous wires or continuous cables with a device according to any of Claims 3 to 15, characterized in that conveying rollers are provided flush with the central tube (21a), which rollers grip a cable fed through the cable tube in front of or behind the central tube (21a) and optionally convey it to a further apparatus, for example to a cutting or winding device.

17. Device according to Claim 16, characterized in that a marking and reading apparatus is arranged for determining the length of the wire or cable moved through the rollers.

18. Device according to any of the preceding Claims, characterized in that the blade holders are spherically rounded on their side which exposes the blade.

## Revendications

1. Procédé de dénudage de fils ou de câbles à section transversale éventuellement non circulaire, suivant lequel un couteau radial (10a) pratiquant une entaille périphérique et un couteau axial (10b) pratiquant une entaille longitudinale dans l'isolant sont amenés l'un après l'autre contre celui-ci, procédé dans lequel après la pénétration du couteau radial (10a), une rotation relative est provoquée entre celui-ci et le fil ou le câble, le couteau radial (10a) étant amené selon une perpendiculaire à la surface du fil ou du câble pendant son avancement vers le fil ou le câble, caractérisé en ce que l'avancement du couteau radial (10a) et du couteau axial (10b) se fait par translation d'un bloc de commande (52) muni de cames de commande, en ce que le couteau radial (10a) et le couteau axial (10b) sont maintenus rigidement sur des porte-couteaux (11a,b), et en ce que les couteaux se situent à peu près dans la même position longitudinale par rapport à la direction axiale du câble.

2. Procédé selon la revendication 1, caractérisé en ce que le couteau axial (10b) est lui aussi amené suivant une perpendiculaire à la surface du fil ou du câble pendant sont avancement vers le fil ou le câble, les positions des couteaux étant choisies de façon à ce que le plan défini par la perpendiculaire respective, et dans lequel se situe aussi l'entaille respective dans l'isolant du câble ou du fil, soit perpendiculaire au plan correspondant traversant l'autre perpendiculaire.

3. Dispositif'approprié à la mise en oeuvre d'un procédé selon la revendication 1 ou 2, comprenant au moins un porte-couteau radial (11a) pour un couteau radial rigide (10a) et au moins un porte-couteau axial (11b) pour un couteau axial rigide (11a), lesquels sont maintenus chacun sur un manche de couteau (5a et 5b) tournant autour d'un axe de rotation commun (35) et pouvant être mis en mouvement dans la direction de l'axe de rotation (35), de telle façon qu'ils se situent à peu près à la même position longitudinale par rapport à l'axe longitudinal du fil ou du câble, les manches de couteau (5a,b) étant chacun retenus dans une glissière parallèle (6a,b), en pouvant coulisser, les glissières parallèles (6a,b) étant perpendiculaires à l'axe de rotation (35) et placées sur une bague tournante (17) qui est montée de façon à pouvoir tourner autour de l'axe de rotation (35) dans un carter (1).

4. Dispositif selon la revendication 3, caractérisé en ce qu'au moins le couteau radial (10a), mais de préférence aussi le couteau axial (10b) peut être soumis à un ajustement relatif par rapport au porte-couteau respectif (11a,b), de façon à ce que la profondeur de coupe respective la plus haute possible, qui est limitée chaque fois par un épaulement (12a) du porte-couteau respectif (11a,b), puisse être ajustée.

5. Dispositif selon la revendication 4, caractérisé en ce qu'au moins le porte-couteau radial (11a) est réalisé sous forme de corps creux avec une ouverture (37) dirigée vers le bas, pour le couteau radial (10a), dans laquelle est placé un piston coulissant (36) lequel présente, à son extrémité inférieure, un dispositif de fixation (13) destiné au couteau radial (10a) et qui est raccordé, à son extrémité supérieure, à un organe d'entraînement par broche (17) ou similaire, qui permet un déplacement relatif ajustable entre le piston (36) et le corps.

6. Dispositif selon la revendication 5, caractérisé en ce que le piston est chargé par ressort par rapport au corps, ce dernier présentant de préférence une bride de calage de boîtier (15) et, le premier, un collet d'appui (16), entre lesquels est placé un ressort de compression (14) qui met l'organe d'entraînement par broche (17) en précontrainte.

7. Dispositif selon la revendication 5 ou 6, caractérisé en ce que l'organe d'entraînement par broche (17) est commandable à distance par un moteur et présente éventuellement un organe de mesure de déplacement interrogeable à distance.

8. Dispositif selon l'une des revendications précédentes 3 à 7, caractérisé en ce qu'au moins un des manches de couteau (5a,b) est monté de façon à pouvoir coulisser sur la glissière parallèle associée (6a,b) par l'intermédiaire d'un chariot à avance linéaire (20a,b), guidé en particulier sur rouleaux ou sur billes.

9. Dispositif selon l'une des revendications précédentes 3 à 8, caractérisé en ce qu'au moins l'un des manches de couteau (5a,b) présente, à son extrémité située à l'opposé du couteau (10a,b), un rouleau de commande (30a,b) qui coopère avec une came de commande (31a,b) solidaire en rotation de la bague tournante (7).

10. Dispositif selon l'une des revendications précédentes 3 à 9, caractérisé en ce que la bague tournante (7) est couplée à un tube central (21a) qui est monté de façon à pouvoir tourner dans le carter (1), à son autre extrémité, et qui porte la came de commande (31a,b).

11. Dispositif selon l'une des revendications précédentes, en particulier selon les revendications 8 à 10, caractérisé en ce qu'au moins un chariot à avance linéaire (20a,b) peut coulisser par rapport à la glissière parallèle respective (6a,b), sous la télécommande d'un moteur, et en ce que, de préférence, un dispositif de mesure interrogeable à distance à prévu sur la glissière parallèle (6a,b).

12. Dispositif selon l'une des revendications précédentes, caractérisé en ce qu'au moins un des manches de couteau (5a,b) se voit adjoindre un ressort de pression (48a,b), de telle sorte qu'il puisse s'effacer radialement par rapport à l'axe de rotation (35), contre la force du ressort, la force du ressort étant, de préférence, réglable et/ou amortie.

13. Dispositif selon l'une des revendications précédentes 9 à 12, caractérisé en ce que le tube central (21a) présente une barre de butée (26), éventuellement déplaçable par moteur, en particulier avec une échelle pour l'ajustement de la longueur des fils ou câbles devant être dénudés.

14. Dispositif selon l'une des revendications précédentes, comprenant un dispositif de centrage (4) immobile en rotation, faisant face au fil ou au câble à engager, caractérisé par la structure suivante:
- une plaque de base (38) avec un alésage centré par rapport à l'axe de rotation (35) est raccordée rigidement au carter (1);
- au moins trois blocs de centrage (39) sont prévus sur la plaque de base (38), dont deux présentent chaque fois des bords de poussée (41) en contact;
- les blocs de centrage (39) disposent d'un guidage à rouleaux ou à broches constitué de broches (42a) qui glissent dans des rainures (60) ménagées dans la plaque de base (38), et chacun d'une broche (42b) qui glisse en plus dans une rainure (54) du disque de commande (43), une rotation du disque de commande provoquant l'entraînement de la broche (42b) dans la direction de l'axe de rotation (35), ce qui se traduit par un déplacement des blocs de centrage radialement par rapport à l'axe de rotation (35);
- le disque de commande (43) est entraîné dans le sens de rotation par un piston de commande (44), en particulier commandable à distance, qui est équipé, de préférence, d'un capteur de position (46) interrogeable à distance;
- un ressort (47) tendu entre le disque de commande (43) et la plaque de base (38) assure le rappel du disque de commande (43) et donc des blocs de centrage (39) contre le piston de commande (44).

15. Dispositif selon l'une des revendications précédentes, caractérisé en ce que le dispositif de centrage se compose de douilles de centrage interchangeables, éventuellement coniques, qui peuvent être bloquées sur le carter (1), éventuellement entre des mors de centrage.

16. Dispositif pour entaillage et/ou dénudage de fils continus ou de câbles continus, comprenant un dispositif selon l'une des revendications 3 à 15, caractérisé en ce qu'en alignement sur le tube central (21a), on a prévu des rouleaux de transport qui saisissent, devant ou derrière le tube central (21a), le câble amené au travers du tube central, et le transportent éventuellement vers un autre appareil, p.ex. un dispositif de découpage ou d'enroulement.

17. Dispositif selon la revendication 16, caractérisé en ce qu'un dispositif de pose de repères et de lecture est prévu pour déterminer la longueur du fil ou du câble déplacé par les rouleaux.

18. Dispositif selon l'une des revendications précédentes, caractérisé en ce que les porte-couteaux présentent une forme arrondie sphérique sur leur face qui met les couteaux à découvert.
